# EUROPEAN PATENT APPLICATION

(11) **EP 4 521 241 A1**
(43) Date of publication of application: **12.03.2025**
(21) Application number: 23846945.6
(22) Date of filing: 24.07.2023
(51) Int. Cl.: G06F 9/455, G06F 3/14

(54) **ELECTRONIC DEVICE, AND METHOD FOR EXECUTING APPLICATION IN MULTI-OS ENVIRONMENT USING SAME**

(30) Priority: 29.07.2022 KR 20220094943; 10.11.2022 KR 20220149354
(71) Applicant: Samsung Electronics Co., Ltd., Suwon-si, Gyeonggi-do 16677 (KR)
(72) Inventor: SHIN, Jinwoo, Suwon-si, Gyeonggi-do 16677 (KR)
(74) Representative: Appleyard Lees IP LLP
(86) International application number: PCT/KR2023/010692
(87) International publication number: WO 2024/025286

(57) **Abstract**

A method of executing an application, performed by an electronic device including a host system and a virtual machine system, includes: obtaining, through the host system, a first execution request for a first guest application installed in the virtual machine system; transmitting, from the host system to the virtual machine system , the first execution request and a generation request for a first virtual display corresponding to the first guest application; outputting a first execution result of the first guest application on the first virtual display that is generated based on the generation request; transmitting, from the virtual machine system to the host system, a first captured image of the first virtual display; and outputting, through the host system, the first captured image on a display of the electronic device.

## Description

### TECHNICAL FIELD

The disclosure relates to an electronic device for executing an application and a method thereof, and more specifically, to an electronic device including a host operating system (OS) and a guest OS, and a method for executing an application on the electronic device.

### BACKGROUND ART

A virtual machine refers to a virtual device created by a physical device, and not a physically present machine/device (e.g., a computer). Software emulating a device (or another machine/device) may be understood as a virtual machine. The virtual machine provides a complete system platform and supports execution of a complete operating system (OS).

An electronic device on which the virtual machine is mounted may include a host system and one or more virtual machine systems.

The host system may operate according to a host OS and include one or more host applications executable in the host OS. The virtual machine system may operate according to a guest OS and include one or more guest applications executable in the guest OS.

Because the guest application is executable in a guest OS environment, a user who wants to execute the guest application needs to switch the host OS to the guest OS.

In a computer including various input devices, such as a keyboard or a mouse, it is relatively easy to switch from the host OS to the guest OS for execution of the guest application, but in an electronic device, such as a television (TV), types of input devices are limited and various age groups use the electronic device, and thus there is a need to simplify execution of the guest application.

### DISCLOSURE

### TECHNICAL SOLUTION

A method, performed by an electronic device including a host system and a virtual machine system, of executing an application, according to an embodiment of the disclosure, includes obtaining an execution request for a first guest application installed in the virtual machine system, through the host system.

According to an embodiment of the disclosure, the method may include transmitting, from the host system to the virtual machine system, the execution request for the first guest application and a generation request for a first virtual display, corresponding to the first guest application.

According to an embodiment of the disclosure, the method may include outputting an execution result of the first guest application on the first virtual display generated according to the generation request.

According to an embodiment of the disclosure, the method may include transmitting, from the virtual machine system to the host system, a first captured image of a screen of the first virtual display.

According to an embodiment of the disclosure, the method may include outputting the first captured image on a display of the electronic device through the host system.

A method, performed by an electronic device including a host system and a virtual machine system, of executing an application, according to an embodiment of the disclosure, includes obtaining an input of selecting a first guest application installed in the virtual machine system from a home screen output on a display of the electronic device, through the host system.

According to an embodiment of the disclosure, the method may include outputting, on the display through the host system, a first captured image including an execution result of the first guest application.

According to an embodiment of the disclosure, the first captured image may be a captured image of a screen of a first virtual display on which the execution result of the first guest application is output.

An electronic device according to an embodiment of the disclosure includes a host system, a virtual machine system, a display, and at least one memory storing at least one instruction, wherein, when the at least one instruction is executed by the electronic device, the electronic device is configured to obtain an execution request for a first guest application installed in the virtual machine system, through the host system.

According to an embodiment of the disclosure, when the at least one instruction is executed by the electronic device, the electronic device may be configured to transmit, from the host system to the virtual machine system, the execution request for the first guest application and a generation request for a first virtual display, corresponding to the first guest application.

According to an embodiment of the disclosure, when the at least one instruction is executed by the electronic device, the electronic device may be configured output an execution result of the first guest application on the first virtual display generated according to the generation request.

According to an embodiment of the disclosure, when the at least one instruction is executed by the electronic device, the electronic device may be configured transmit, from the virtual machine system to the host system, a first captured image of a screen of the first virtual display.

According to an embodiment of the disclosure, when the at least one instruction is executed by the electronic device, the electronic device may be configured to output the first captured image on the display through the host system.

An electronic device according to an embodiment of the disclosure includes a host system, a virtual machine system, a display, and at least one memory storing at least one instruction, wherein, when the at least one instruction is executed by the electronic device, the electronic device is configured to obtain an input of selecting a first guest application installed in the virtual machine system from a home screen output on the display through the host system.

According to an embodiment of the disclosure, when the at least one instruction is executed by the electronic device, the electronic device may be configured output, on the display through the host system, a first captured image including an execution result of the first guest application.

According to an embodiment of the disclosure, the first captured image may be a captured image of a screen of a first virtual display on which the execution result of the first guest application is output.

### DESCRIPTION OF DRAWINGS

The above and other aspects, features, and advantages of certain embodiments of the present disclosure will be more apparent from the following description taken in conjunction with the accompanying drawings, in which:
FIG. 1 is a diagram of a configuration of an electronic device, according to an embodiment of the disclosure;
FIG. 2 is a diagram showing a home screen provided by a host system, according to an embodiment of the disclosure;
FIG. 3 is a flowchart of a method by which an electronic device executes an application, according to an embodiment of the disclosure;
FIG. 4 is a diagram showing screens output on a display and a virtual display, as execution results of a first guest application, according to an embodiment of the disclosure;
FIG. 5 is a diagram showing screens output on a display and a virtual display, as execution results of a second guest application, according to an embodiment of the disclosure;
FIG. 6 is a diagram showing screens output on a display and a virtual display, as execution results of a second guest application, according to an embodiment of the disclosure;
FIG. 7A is a diagram showing a screen output on a virtual display, according to an embodiment of the disclosure;
FIG. 7B is a diagram showing an image obtained by capturing the screen of the virtual display of FIG. 7A, according to an embodiment;
FIG. 7C is a diagram showing a result of combining an image of a home screen with the image of FIG. 7B, according to an embodiment;
FIG. 8A is a diagram showing an image obtained by capturing the screen of the virtual display of FIG. 7A, according to an embodiment;
FIG. 8B is a diagram showing a result of combining an image of a home screen with the image of FIG. 8A, according to an embodiment;
FIG. 9 is a diagram showing operations of a host system and a virtual machine system, according to an embodiment of the disclosure; and
FIG. 10 is a diagram of a configuration of an electronic device, according to an embodiment of the disclosure.

### BEST MODE

A method, performed by an electronic device 100 including a host system 130 and a virtual machine system 150, of executing an application, according to an embodiment of the disclosure, may include obtaining an execution request for a first guest application installed in the virtual machine system 150, through the host system 130.

According to an embodiment of the disclosure, the method may include transmitting, from the host system 130 to the virtual machine system 150, the execution request for the first guest application and a generation request for a first virtual display 156-1, corresponding to the first guest application.

According to an embodiment of the disclosure, the method may include outputting an execution result of the first guest application on the first virtual display 156-1 generated according to the generation request.

According to an embodiment of the disclosure, the method may include transmitting, from the virtual machine system 150 to the host system 130, a first captured image of a screen of the first virtual display 156-1.

According to an embodiment of the disclosure, the method may include outputting the first captured image on a display 115 or 1030 of the electronic device 100 through the host system 130.

### MODE FOR INVENTION

As the disclosure allows for various changes and numerous examples, particular example embodiments of the disclosure will be illustrated in the drawings and described in detail in the written description. However, this is not intended to limit the embodiments of the disclosure to particular modes of practice, and it will be understood that all changes, equivalents, and substitutes that do not depart from the spirit and technical scope of the disclosure are encompassed in the embodiments of the disclosure.

In the disclosure, certain detailed explanations of related art may be omitted when it is deemed that they may unnecessarily obscure the essence of the disclosure. Also, numbers (for example, a first, a second, and the like) used in the description of the specification correspond to identifier codes for distinguishing one element from another.

In the disclosure, the expression "at least one of a, b or c" indicates only a, only b, only c, both a and b, both a and c, both b and c, all of a, b, and c, or variations thereof.

In the disclosure, it will be understood that when elements are "connected" or "coupled" to each other, the elements may be directly connected or coupled to each other, but may alternatively be connected or coupled to each other with an intervening element therebetween, unless specified otherwise.

In the disclosure, regarding an element represented as a "-er (or)", "unit", or a "module", two or more elements may be combined into one element or one element may be divided into two or more elements according to subdivided functions. Each element described hereinafter may additionally perform some or all of functions performed by another element, in addition to main functions of itself, and some of the main functions of each element may be performed entirely by another component.

In the disclosure, a "user" may denote a person controlling functions of an electronic device by using a control device (e.g., a keyboard, a mouse, or a remote controller). The user may include a viewer, a manager, or an installation engineer.

The electronic device, for example, a computer, may include general-purpose processors designed to execute a set of instructions. The processor may execute instructions unique to the processor.

Uniqueness of the processor generally causes incompatibility of the electronic device with a hardware architecture. Accordingly, to increase the number of operating systems and the number of applications executable in the electronic device, a virtual machine technology enabling different types of instructions to be executed may be adopted.

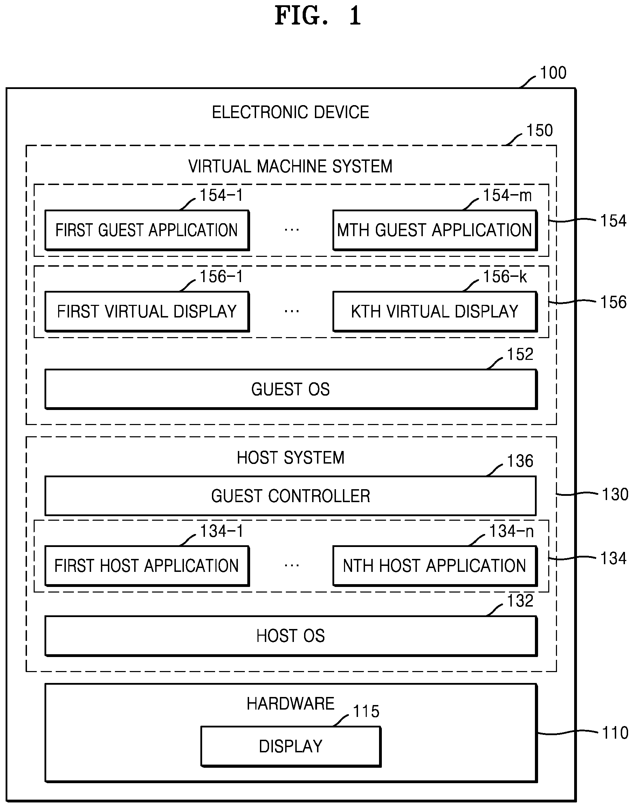

FIG. 1 is a diagram of a configuration of an electronic device 100, according to an embodiment of the disclosure.

Referring to FIG. 1, the electronic device 100 may include hardware 110, a host system 130, and a virtual machine system 150.

The electronic device 100 may be a general-purpose computer or a display device.

The display device may include various types of devices capable of receiving and outputting content, such as a network television (TV), a smart TV, an Internet TV, a web TV, or an Internet protocol TV (IPTV).

The hardware 110 includes physical devices for driving the host system 130 and the virtual machine system 150.

As shown in FIG. 1, the hardware 110 may include a display 115. The display 115 is a physical display and may be distinguished from a virtual display described below.

In an embodiment, the display 115 may include a liquid crystal display (LCD), a plasma display panel (PDP), a light-emitting diode (LED), an organic LED (OLED), or a field emission display (FED), but is not limited thereto. The display 115 may include any type of device capable of visually outputting data.

In FIG. 1, the hardware 110 includes only the display 115, but the hardware 110 may further include at least one processor and at least one memory.

The at least one memory may include a random-access memory storing applications and data used by the applications.

The at least one memory may include instructions for executing a host application and/or a guest application described below.

The at least one processor may perform a process of executing an application described below by operating according to an instruction stored in the at least one memory.

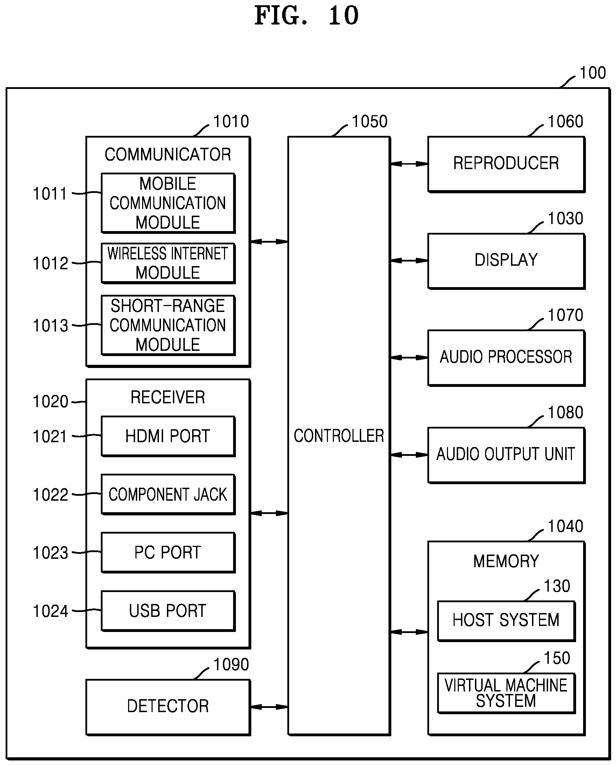

Physical devices that may be included in the hardware 110 will be described below with reference to FIG. 10.

The host system 130 may include a host operating system (OS) 132, at least one host application 134 (e.g., first host application 134-1 through nth host application 134-n), and a guest controller 136. Although FIG. 1 shows that a plurality of host applications 134-1 through 134-n are included in the host system 130, one host application may be included in the host system 130.

The host system 130 may be understood as a set of instructions for driving the host OS 132, the at least one host application 134, and the guest controller 136.

The host system 130 provides an OS environment for executing a series of processes in the electronic device 100.

The host OS 132 may control the hardware 110 in the electronic device 100 and manage system resources for all applications.

The at least one host application 134 is a program operable in the host OS 132, and for example, may include an Internet browser, a word processor, and an over-the-top (OTT) program.

In FIG. 1, the first host application 134-1 through the nth host application 134-n are installed in the host system 130.

A host application selected by a user from among the at least one host application 134 may be executed, and an execution result may be output on the display 115.

The guest controller 136 may be a set of instructions for executing a guest application.

The guest controller 136 may transmit/receive data to/from the virtual machine system 150, for example, a guest OS 152, according to an execution request for a guest application, and output an execution result of the guest application on the display 115.

In FIG. 1, a guest controller 136 is included in the host system 130, but in an embodiment, a plurality of the guest controller 136 (e.g., a plurality of guest controllers 136) may be included in the host system 130.

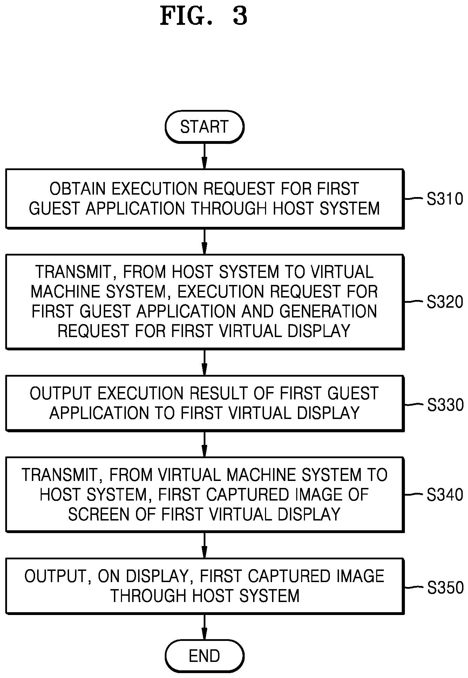

Operations of the host system 130, based on the guest controller 136, will be described below with reference to FIG. 3.

The host system 130 may adopt a virtual machine technology so as to execute instructions executable in a type of an OS different from a type of the host OS 132.

The virtual machine system 150 is realized by implementing physical hardware into software, and may include the guest OS 152, at least one guest application 154 (e.g., first guest application 154-1 through mth guest application 154-m), and at least one virtual display 156 (e.g., first virtual display 156-1 through kth virtual display 156-k). Although FIG. 1 shows that a plurality of guest applications 154-1 through 154-m are included in the virtual machine system 150, one guest application may be included in the virtual machine system 150. Also, although FIG. 1 shows that a plurality of virtual displays 156-1 through 156-k are included in the virtual machine system 150, one virtual display may be included in the virtual machine system 150.

The virtual machine system 150 may be understood as a set of instructions for driving the guest OS 152 and the at least one guest application 154.

The guest OS 152 may support execution of the at least one guest application 154, and generate virtual hardware, for example, the at least one virtual display 156, according to a request of the guest controller 136.

In FIG. 1, the virtual machine system 150 includes the first virtual display 156-1 through the kth virtual display 156-k, but the first through kth virtual displays 156-1 through 156-k are generated for execution of a guest application, according to a request of the guest controller 136. Accordingly, the first through kth virtual displays 156-1 through 156-k may not need to be pre-generated. However, according to an embodiment of the disclosure, the at least one virtual display 156 may be pre-generated.

The at least one guest application 154 is a program executable in the guest OS 152, and for example, may include an Internet browser, a word processor, and an OTT program.

In FIG. 1, the first guest application 154-1 through the mth guest application 154-m are installed in the virtual machine system 150. A guest application selected by the user from among the at least one guest application 154 may be executed, and execution result may be output on one virtual display.

The at least one virtual display 156 is realized by emulating a physical display, and an execution result of the at least one guest application 154 may be output on the at least one virtual display 156.

A screen output through the at least one virtual display 156 is not shown to the user because the at least one virtual display 156 are not a physical display, and the screen of the at least one virtual display 156 is output on the display 115 through a capturing process described below, and thus the user may identify an execution result of a guest application.

The electronic device 100 according to an embodiment of the disclosure may not output, on the display 115, a switching process to the guest OS 152, when an execution request for a guest application is obtained while operating according to the host OS 132.

The electronic device 100 may output, on the display 115, the execution result of the guest application as if a host application is executed. Accordingly, the user is unable to realize that the electronic device 100 is being operated according to several OSs, and recognize all applications installed in the electronic device 100 as a host application.

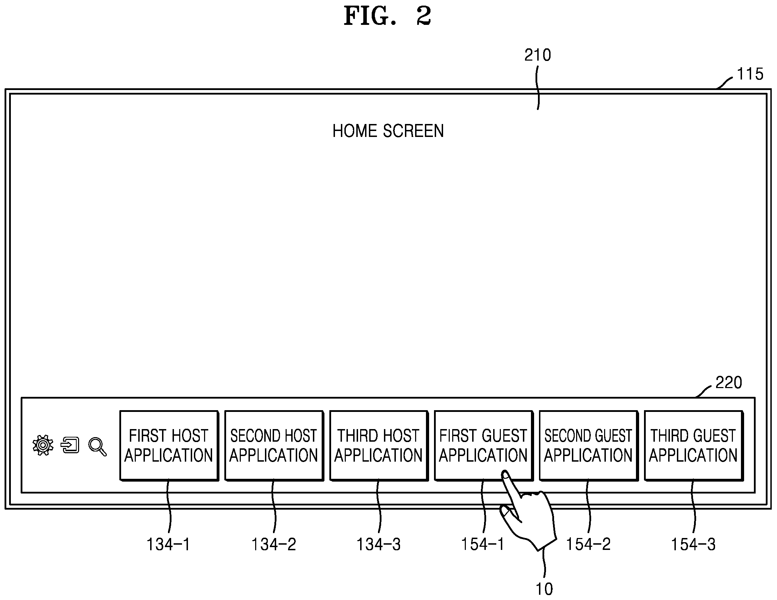

The electronic device 100 may, for example, output an application list including the at least one host application 134 included in the host system 130 and the at least one guest application 154 included in the virtual machine system 150 on the display 115, so as to receive an execution request for an application from the user, as will be described with reference to FIG. 2.

FIG. 2 is a diagram showing a home screen 210 provided by the host system 130, according to an embodiment of the disclosure.

The display 115 of the electronic device 100 may output the home screen 210 provided by the host system 130.

The home screen 210 may include an application list 220 of applications installed in the host system 130 and virtual machine system 150.

As shown in FIG. 2, the home screen 210 may include the application list 220 including the first guest application 154-1, a second guest application 154-2, and a third guest application 154-3, together with the first host application 134-1, a second host application 134-2, and a third host application 134-3.

A user 10 may execute an application by selecting the application from the applications included in the application list 220.

According to an embodiment of the disclosure, the user 10 may search various types of applications usable in the electronic device 100 through left/right scrolling based on an input device.

When the user 10 selects a host application from the application list 220, the host application selected by the user 10 may be executed in the host OS 132 and an execution result thereof may be output on the display 115.

The user 10 may select a guest application, for example, the first guest application 154-1 of FIG. 2, from the application list 220, and an operation of the electronic device 100 when the first guest application 154-1 is selected will be described with reference to FIG. 3.

FIG. 3 is a flowchart of a method by which the electronic device 100 executes an application, according to an embodiment of the disclosure.

In operation S310, the electronic device 100 obtains an execution request for the first guest application 154-1 through the host system 130.

According to an embodiment of the disclosure, the electronic device 100 may obtain the execution request for the first guest application 154-1 according to an input of a user regarding the home screen 210 output on the display 115 through the host system 130.

According to an embodiment of the disclosure, the execution request for the first guest application 154-1 may be caused by a host application. A case where the execution request for the first guest application 154-1 is caused by the host application may denote, for example, a case where the host application requests execution of the first guest application 154-1 according to a self-function or an input of the user. For example, the electronic device 100 may obtain the execution request for the first guest application 154-1 from the host application according to the input of the user regarding the host application.

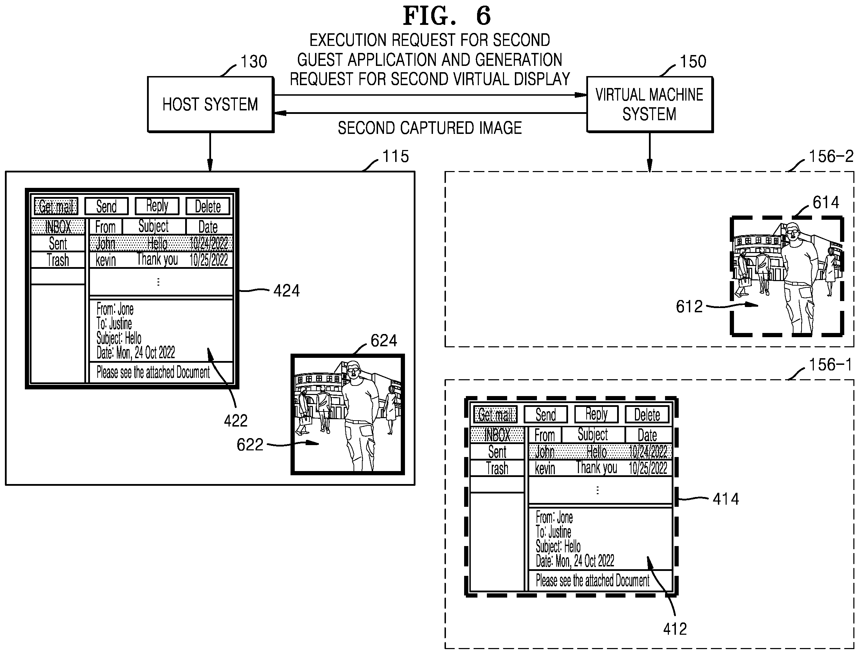

According to an embodiment of the disclosure, the execution request for the first guest application 154-1 may not be caused by another guest application. For example, when the other guest application requests execution of the first guest application 154-1 according to an input of the user regarding the other guest application, processes shown in FIG. 3 may not be performed. An embodiment of the disclosure for such a case will be described below with reference to FIG. 6.

In operation S320, the electronic device 100 transmits, from the host system 130 to the virtual machine system 150, the execution request for the first guest application 154-1 and a generation request for the first virtual display 156-1 corresponding to the first guest application 154-1.

According to an embodiment of the disclosure, the execution request for the first guest application 154-1 and the generation request for the first virtual display 156-1 may be transmitted from the guest controller 136 described above to the guest OS 152.

In detail, upon obtaining the execution request for the first guest application 154-1, the host OS 132 may execute the guest controller 136, and the guest controller 136 may transmit, to the guest OS 152, the execution request for the first guest application 154-1 and the generation request for the first virtual display 156-1.

In operation S330, the electronic device 100 may output an execution result of the first guest application 154-1 on the first virtual display 156-1 generated in the virtual machine system 150.

The guest OS 152 of the virtual machine system 150 may generate the first virtual display 156-1 emulating a physical display, according to the generation request for the first virtual display 156-1. Then, the guest OS 152 may output a first guest window including the execution result of the first guest application 154-1 on the first virtual display 156-1.

A window denotes an area of a certain size where an execution result of an application is arranged. For example, the window may denote a rectangular area output on a screen of the display 115 through execution of an Internet browser.

According to an embodiment of the disclosure, a guest window may denote an area where an execution result of a guest application is arranged, and a host window may be an area where an execution result of a host application is arranged.

As described above, a virtual display that is not a physical display does not include a light-emitting device (e.g., a backlight or LED), and thus the guest window including the execution result of the guest application being output on the virtual display may be understood as pixel values of the area of the certain size being determined through the execution of the guest application.

In operation S340, the electronic device 100 may transmit, from the virtual machine system 150 to the host system 130, a first captured image of a screen of the first virtual display 156-1 on which the execution result of the first guest application 154-1 is output.

The virtual machine system 150 may generate the first captured image of the screen of the first virtual display 156-1 on which the execution result of the first guest application 154-1 is output.

The first captured image may be generated by capturing the screen of the first virtual display 156-1. Here, the capturing may denote generating a same image as an entire area or partial area of a screen of a virtual display or generating an image by combining at least some of objects included in the screen of the virtual display.

The execution result of the first guest application 154-1 may be included in the first guest window, and thus the first captured image may include the first guest window as an object.

According to an embodiment of the disclosure, the virtual machine system 150 may crop at least one guest window located in the screen of the first virtual display 156-1 and generate the first captured image including the cropped at least one guest window.

According to an embodiment of the disclosure, the virtual machine system 150 may generate the first captured image by cropping a rectangular area including the at least one guest window located in the screen of the first virtual display 156-1.

According to an embodiment of the disclosure, information about the first guest window itself, for example, information about a position of the first guest window and pixel values included in the first guest window, is not transmitted to the host system 130, but the first guest window is transmitted to the host system 130 in the form of an image. The first guest window is transmitted in the form of an image is so that the execution result of the first guest application 154-1 in the virtual machine system 150 is identically output in the host system 130.

For example, in a case where two or more guest windows are output as the execution result of the first guest application 154-1, it is difficult for the host system 130 to determine a relationship between the two guest windows when only information about the guest windows themselves is transmitted to the host system 130, and thus a result different from when the first guest application 154-1 is executed in the virtual machine system 150 may be output through the host system 130. For example, when one guest window is covering another guest window, the host system 130 may output the two guest windows such that the two guest windows do not cover each other.

In other words, according to an embodiment of the disclosure, an execution result of a guest application is output through the host system 130 in the same manner as the virtual machine system 150, and thus it is difficult for the user to find an unnatural point from the execution result of the guest application.

In operation S350, the electronic device 100 outputs the first captured image on the display 115 through the host system 130.

According to an embodiment of the disclosure, the electronic device 100 may output a first host window including the first captured image on the display 115.

According to an embodiment of the disclosure, the user may identify the execution result of the guest application through the display 115 operated according to the host OS 132 of the host system 130, and may not recognize that the guest OS 152 is being operated to execute the guest application or that the guest OS 152 needs to be operated.

According to an embodiment of the disclosure, when an execution request for a host application is obtained, the electronic device 100 may execute the host application in an environment of the host OS 132 and output an execution result thereof on the display 115. The virtual machine system 150 is not required when the host application is executed, and thus processes described with reference to FIG. 3 may not be performed.

The execution result of the first guest application 154-1 may be changed after the first captured image corresponding to the execution result of the first guest application 154-1 is output on the display 115. In this case, the first captured image is also required to be changed.

According to an embodiment of the disclosure, when the user selects a menu included in the first captured image, a change in the execution result of the first guest application 154-1 may occur.

According to an embodiment of the disclosure, when an input of the user regarding the first captured image is input, the host system 130 may transmit, to the virtual machine system 150, position information about where the input of the user has occurred, and the first guest application 154-1 of the virtual machine system 150 may change the execution result according to the input of the user.

Also, according to an embodiment of the disclosure, the execution result of the first guest application 154-1 may be changed according to a self-function of the first guest application 154-1. For example, when a certain image arranged in the guest window as the execution result of the first guest application 154-1 is periodically changed, the first captured image also needs to be changed accordingly.

According to an embodiment of the disclosure, the virtual machine system 150 may generate an updated first captured image of the screen of the first virtual display 156-1 including an updated execution result of the first guest application 154-1, and transmit the updated first captured image to the host system 130.

According to an embodiment of the disclosure, the virtual machine system 150 may generate the first captured image according to pre-set intervals or whenever a change occurs in the execution result of the first guest application 154-1, and transmit the first captured image to the host system 130.

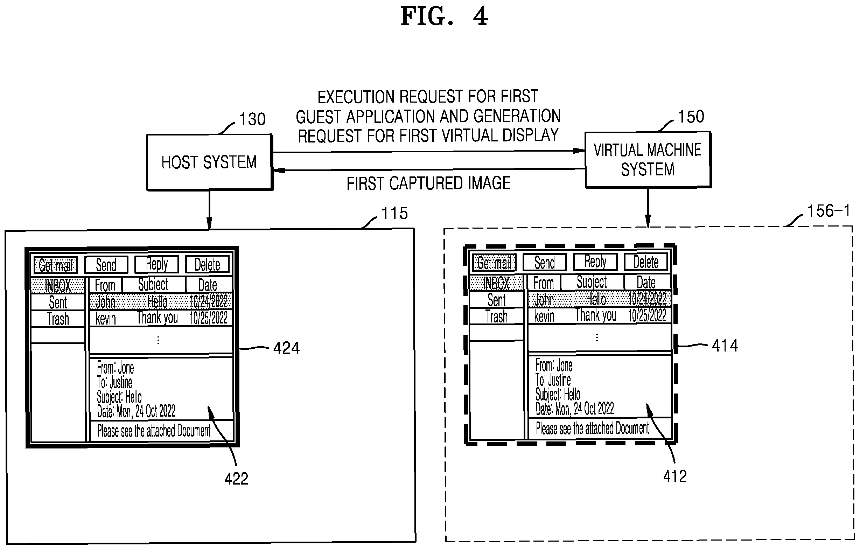

Hereinafter, screens output on a virtual display and the display 115, according to execution of a guest application, will be described with reference to FIGS. 4 through 6.

FIG. 4 is a diagram showing screens output on the display 115 and a virtual display, as execution results of the first guest application 154-1, according to an embodiment of the disclosure.

As described above, when the execution request for the first guest application 154-1 is obtained, the host system 130 may transmit, to the virtual machine system 150 through the guest controller 136, the execution request for the first guest application 154-1 and the generation request for the first virtual display 156-1.

The virtual machine system 150 may generate the first virtual display 156-1 according to the generation request for the first virtual display 156-1, and output a first guest window 414 including an execution result 412 of the first guest application 154-1 on the first virtual display 156-1.

The virtual machine system 150 may generate the first captured image of the first virtual display 156-1 and transmit the first captured image to the host system 130.

The host system 130 may output, on the display 115, a first host window 424 including a first captured image 422 received from the virtual machine system 150.

In FIG. 4, the first virtual display 156-1 and the first guest window 414 are indicated by broken lines unlike the display 115 and the first host window 424, so as to emphasize that the first virtual display 156-1 and the first guest window 414 are not actually visible to the user.

According to an embodiment of the disclosure, the first virtual display 156-1 may include two or more guest windows as the execution results of the first guest application 154-1. In this case, the first captured image including the two or more guest windows is generated and transmitted from the virtual machine system 150 to the host system 130.

The host system 130 may include the first captured image including the two or more guest windows as objects to a first host window 424, and output the first host window 424 on the display 115.

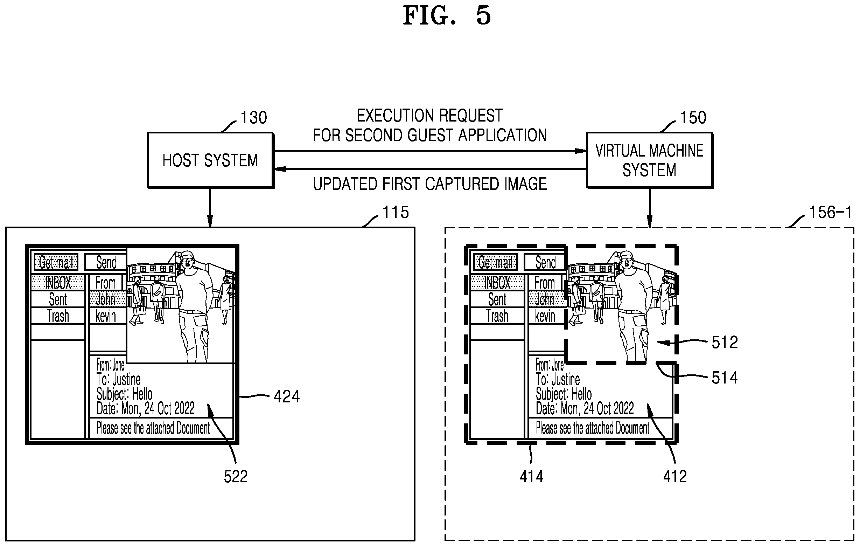

FIG. 5 is a diagram showing screens output on the display 115 and a virtual display, as execution results of the second guest application 154-2, according to an embodiment of the disclosure.

When the execution request for the second guest application 154-2 is obtained after the first captured image 422 including the execution result 412 of the first guest application 154-1 is output on the display 115, the host system 130 may determine whether it is required to generate a new virtual display for the second guest application 154-2.

According to an embodiment of the disclosure, when the execution request for the second guest application 154-2 is caused from the first guest application 154-1, the host system 130 may determine not to generate the new virtual display.

A case where the execution request for the second guest application 154-2 is caused from the first guest application 154-1 may include a case where the first guest application 154-1 has requested execution of the second guest application 154-2 according to an input of the user regarding the first guest application 154-1 or according to a function of the first guest application 154-1.

According to an embodiment of the disclosure, when the execution request for the second guest application 154-2 is not caused from the first guest application 154-1, the host system 130 may determine to generate the new virtual display. For example, when the user has selected the second guest application 154-2 from a home screen, it may be determined that the execution request for the second guest application 154-2 is not caused from the first guest application 154-1.

When the execution request for the second guest application 154-2 is caused from the first guest application 154-1, the host system 130 may transmit the execution request for the second guest application 154-2 to the virtual machine system 150 as shown in FIG. 5. In other words, a generation request for the new virtual display may not be transmitted to the virtual machine system 150.

The virtual machine system 150 may execute the second guest application 154-2 and output, on the first virtual display 156-1, a second guest window 514 where an execution result 512 of the second guest application 154-2 is arranged.

As shown in FIG. 5, the second guest window 514 may cover at least a portion of the first guest window 414 including the execution result 412 of the first guest application 154-1.

According to an embodiment of the disclosure, the second guest window 514 and the first guest window 414 may not overlap each other.

Because a screen of the first virtual display 156-1 has been changed according to the execution of the second guest application 154-2, the virtual machine system 150 may generate an updated first captured image 522 of the first virtual display 156-1 and transmit the updated first captured image 522 to the host system 130.

The host system 130 may change the first captured image 422 included in the first host window 424 to the updated first captured image 522.

In an embodiment of the disclosure shown in FIG. 5, the first guest window 414 and the second guest window 514 are output on the first virtual display 156-1. In an embodiment, the first host window 424 including the execution result 412 of the first guest application 154-1 included in the first guest window 414 and the execution result 512 of the second guest application 154-2 included in the second guest window 514 is output on the display 115.

As described above, when information of the first guest window 414 and information of the second guest window 514 are individually transmitted to the host system 130, the second guest window 514 covering at least a portion of the first guest window 414, as in FIG. 5, may not be output on the display 115.

According to an embodiment of the disclosure, the updated first captured image 522 of the first virtual display 156-1 outputting the first guest window 414 and the second guest window 514 is included in the first host window 424, and thus a relationship between the execution result 412 of the first guest application 154-1 and the execution result 512 of the second guest application 154-2 in the virtual machine system 150 may be reflected on the display 115.

According to an embodiment of the disclosure, when the user terminates execution of one of the first guest application 154-1 and the second guest application 154-2 after the updated first captured image 522 is output on the display 115, the virtual machine system 150 may delete a guest window corresponding to a guest application of which the execution is terminated. Then, the virtual machine system 150 may transmit, to the host system 130, the first captured image including only a guest window corresponding to a guest application being executed, so that the first captured image is output on the display 115.

FIG. 6 is a diagram showing screens output on the display 115 and a virtual display, as execution results of the second guest application 154-2, according to an embodiment of the disclosure.

When the execution request for the second guest application 154-2 is obtained after the first captured image 422 including the execution result 412 of the first guest application 154-1 is output on the display 115, the host system 130 may determine whether it is required to generate a new virtual display for the second guest application 154-2.

As described above, according to an embodiment of the disclosure, when the execution request for the second guest application 154-2 is caused from the first guest application 154-1, the host system 130 may determine not to generate the new virtual display.

When the execution request for the second guest application 154-2 is not caused from the first guest application 154-1, the host system 130 may determine to generate the new virtual display.

As shown in FIG. 6, when the execution request for the second guest application 154-2 is not caused from the first guest application 154-1, the host system 130 may transmit, to the virtual machine system 150, the execution request for the second guest application 154-2 and a generation request for the second virtual display 156-2.

The virtual machine system 150 may generate the second virtual display 156-2 according to the generation request for the second virtual display 156-2. The virtual machine system 150 may execute the second guest application 154-2 and output, on the second virtual display 156-2, a second guest window 614 where an execution result 612 of the second guest application 154-2 is arranged.

The virtual machine system 150 may generate a second captured image 622 of the second virtual display 156-2 and transmit the second captured image 622 to the host system 130.

The host system 130 may output a second host window 624 including the second captured image 622 on the display 115.

In an embodiment of the disclosure of FIG. 6, the first guest window 414 and the second guest window 614 are respectively output on the first virtual display 156-1 and the second virtual display 156-2, and the first host window 424 corresponding to the first guest window 414 and the second host window 624 corresponding to the second guest window 614 may be output on the display 115.

It is determined that a virtual display and a host window correspond to each other in a one-to-one manner, from an embodiment of the disclosure shown in FIGS. 5 and 6. Even when several guest windows are output on one virtual display, the several guest windows may be included in one host window, in the form of an image.

As described above, the host system 130 may include a plurality of guest controllers 136, and each guest controller 136 may transmit, to the virtual machine system 150, an execution request for a guest application and a generation request for a virtual display when the execution request for the guest application is obtained.

According to an embodiment of the disclosure, the plurality of guest controllers 136 may correspond to virtual displays, respectively. In other words, one guest controller 136 may transmit a generation request for one virtual display to the virtual machine system 150.

For example, when a virtual display needs to be generated as the execution request for the first guest application 154-1 is obtained regardless of another guest application, a first guest controller from among the plurality of guest controllers 136 may transmit, to the virtual machine system 150, the execution request for the first guest application 154-1 and the generation request for the virtual display. Also, because it is not required to generate a new virtual display when the execution request for the second guest application 154-2 is caused from the first guest application 154-1, the first guest controller may transmit the execution request for the second guest application 154-2 to the virtual machine system 150 again. However, when the execution request for the second guest application 154-2 is not caused from the first guest application 154-1, a second guest controller different from the first guest controller may transmit, to the virtual machine system 150, the execution request for the second guest application 154-2 and the generation request for the virtual display.

In an embodiment, two or more guest windows may be output on one virtual display, wherein the two or more guest windows may be generated by one guest application or by two or more guest applications.

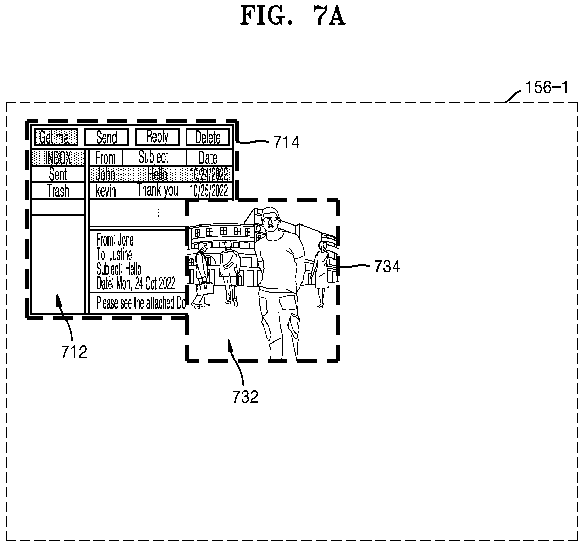

When one guest window does not cover an entire region of another guest window or an entire region of one guest window is not included as a portion of another guest window, a captured image of a virtual display may include a background screen provided by the virtual machine system 150. Such a captured image may cause unnaturalness when output on the display 115. This will be described with reference to FIGS. 7A through 7C.

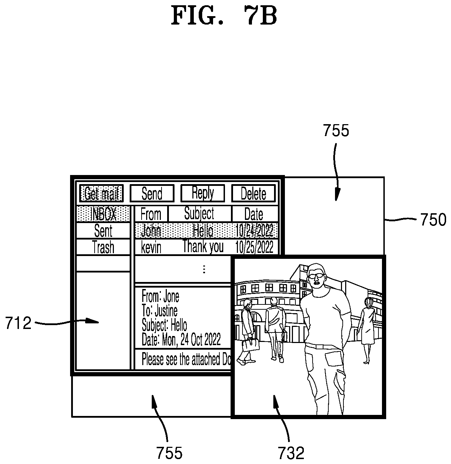

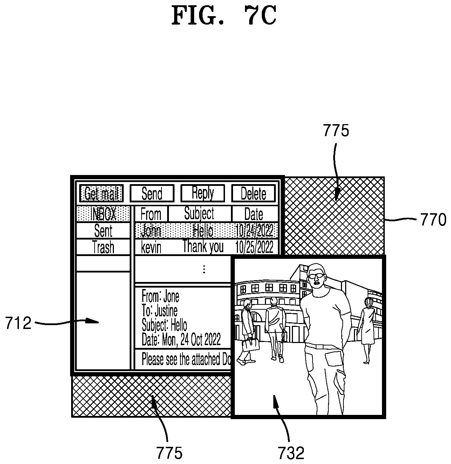

FIG. 7A is a diagram showing a screen output on a virtual display, according to an embodiment of the disclosure, and FIG. 7B is a diagram showing an image obtained by capturing the screen of the virtual display of FIG. 7A, according to an embodiment, and FIG. 7C is a diagram showing a result of combining an image of a home screen with the image of FIG. 7B, according to an embodiment.

As shown in FIG. 7A, a first guest window 714 including an execution result (hereinafter, a first execution result) 712 of the first guest application 154-1, and a second guest window 734 including an execution result (hereinafter, a second execution result) 732 of the first guest application 154-1 or second guest application 154-2 may be output on the first virtual display 156-1. The second guest window 734 may cover a partial region of the first guest window 714.

When a rectangular region including the first guest window 714 and the second guest window 734 is captured for generation of the first captured image to be transmitted to the host system 130, a rectangular image 750 includes a partial region of the first execution result 712, an entire region of the second execution result 732, and a region 755 where the first execution result 712 and the second execution result 732 are not positioned, as shown in FIG. 7B.

When an image of a background screen provided by the virtual machine system 150 is included in the region 755 where the first execution result 712 and the second execution result 732 are not positioned, the image of the background screen is output by the display 115, and thus the user may recognize an execution result of a guest application as having an error or may feel unnaturalness.

Accordingly, as shown in FIG. 7C, the virtual machine system 150 may generate a first captured image 770 by combining a partial image 775 of a home screen provided by the host system 130 with a region where the first execution result 712 and the second execution result 732 are not positioned from among the rectangular image 750.

Here, the partial image 775 of the home screen combined with the rectangular image 750 is only an example, and the virtual machine system 150 may combine, with the rectangular image 750, a portion of a background image where the first host window including the first captured image is to be arranged.

The virtual machine system 150 may transmit the first captured image 770 to the host system 130 and the host system 130 may output the first host window including the first captured image 770 on the display 115, and thus the user may recognize the execution result of the guest application as if the host application has been executed.

In FIG. 7A, even when one guest window does not cover a portion of another guest window among the first guest window 714 and the second guest window 734, i.e., even when the first guest window 714 and the second guest window 734 do not overlap each other, a rectangular image including the first guest window 714 and the second guest window 734 may include the image of the background screen provided by the virtual machine system 150. For example, when the second guest window 734 is positioned at the right bottom of the first guest window 714, the first guest window 714 and the second guest window 734 do not overlap each other, but the rectangular image including the first guest window 714 and the second guest window 734 may include the image of the background screen provided by the virtual machine system 150.

In this case, the virtual machine system 150 may generate the first captured image by combining a partial image of the home screen provided by the host system 130 with a region of the rectangular image, where the first guest window 714 (or the first execution result 712) and the second guest window 734 (or the second execution result 732) are not positioned.

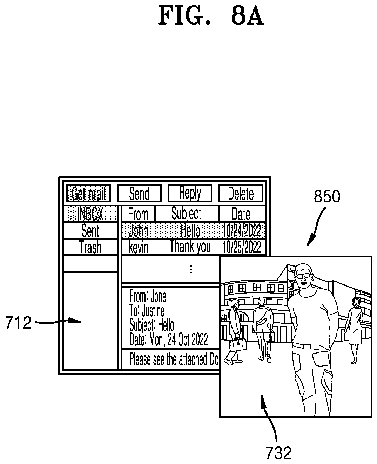

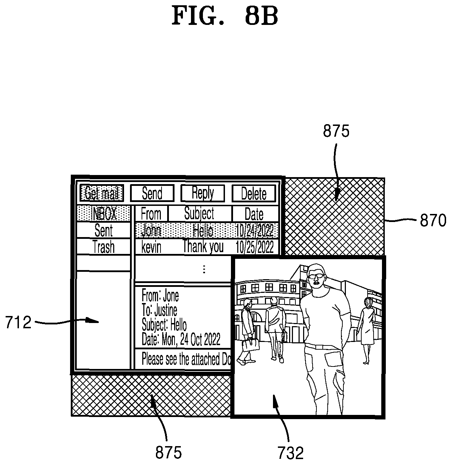

FIG. 8A is a diagram showing an image 850 obtained by capturing a screen of the first virtual display 156-1 of FIG. 7A, according to an embodiment, and FIG. 8B is a diagram showing a result of combining a partial image 875 of a home screen with the image 850 of FIG. 8A, according to an embodiment.

As shown in FIG. 8A, the virtual machine system 150 may crop the first guest window 714 and the second guest window 734 output on the first virtual display 156-1 shown in FIG. 7A. The image 850 generated through the cropping may include a partial region of the first execution result 712 and an entire region of the second execution result 732.

The image 850 obtained through the cropping is not rectangular, and thus the virtual machine system 150 may generate a rectangular first captured image 870 by combining the partial image 875 of the home screen provided by the host system 130 with a peripheral region of the image 850 generated through the cropping, as shown in FIG. 8B.

The virtual machine system 150 may transmit the first captured image 870 to the host system 130 to be output on the display 115.

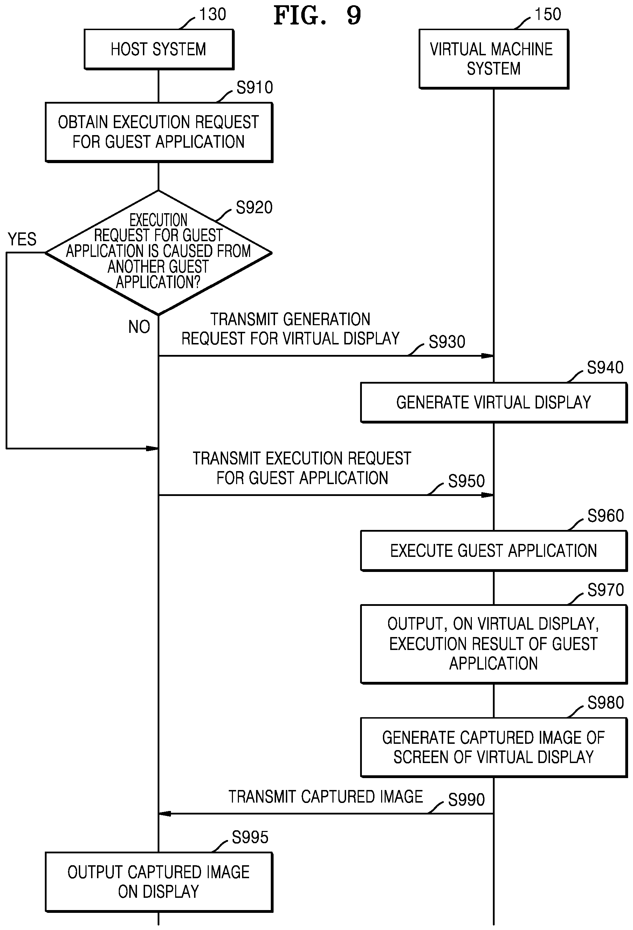

FIG. 9 is a diagram showing operations of the host system 130 and the virtual machine system 150, according to an embodiment of the disclosure.

The operations of the host system 130 and the virtual machine system 150 shown in FIG. 9 may be performed according to control by the electronic device 100.

Referring to FIG. 9, the host system 130 obtains an execution request for a guest application (operation S910).

The host system 130 may obtain the execution request for the guest application, according to an input of a user on a home screen. According to an embodiment of the disclosure, the execution request for the guest application may be obtained from another host application or another guest application.

The host system 130 determines whether the execution request for the guest application is caused from the other guest application (operation S920).

The execution request for the guest application being caused from the other guest application may denote, for example, the other guest application requesting execution of the guest application according to an input of the user on the other guest application or according to a function of the other guest application.

When the execution request for the guest application is not caused from the other guest application, the host system 130 transmits a generation request for a virtual display to the virtual machine system 150 (operation S930) and the virtual machine system 150 generates a virtual display corresponding to the guest application according to a request of the host system 130 (operation S940).

The host system 130 transmits the execution request for the guest application to the virtual machine system 150 (operation S950).

When the execution request for the guest application is caused from the other guest application, the transmitting of the generation request for the virtual display to the virtual machine system 150 (operation S930) and the generating of the virtual display by the virtual machine system 150 (operation S940) may not be performed. In this case, a virtual display corresponding to the other guest application may be already generated in the virtual machine system 150.

The virtual machine system 150 executes the guest application requested to be executed by the host system 130 (operation S960) and outputs an execution result of the guest application on the virtual display (operation S970). When the execution request for the guest application is not caused from the other guest application, the execution result of the guest application may be output on the virtual display generated in operation S940. When the execution request for the guest application is caused from the other guest application, the execution result of the guest application may be output on a previously generated virtual display.

The virtual machine system 150 generates a captured image of a screen of the virtual display (operation S980) and transmits the captured image to the host system 130 (operation S990).

The host system 130 outputs the captured image on the display 115 (operation S995). The host system 130 may output a host window including the captured image on the display 115.

Hereinafter, a configuration of the electronic device 100 will be described.

FIG. 10 is a diagram of a configuration of the electronic device 100, according to an embodiment of the disclosure.

Referring to FIG. 10, the electronic device 100 may include a communicator 1010, a receiver 1020, a display 1030, a memory 1040, a controller 1050, a reproducer 1060, an audio processor 1070, an audio output unit 1080, and a detector 1090.

The communicator 1010 may include one or more modules enabling wireless communication between the electronic device 100 and a wireless communication system or between the electronic device 100 and another electronic device. For example, the communicator 1010 may include a mobile communication module 1011, a wireless Internet module 1012, and a short-range communication module 1013.

The mobile communication module 1011 may transmit or receive a wireless signal to or from at least one of a base station, an external terminal, or a server, on a mobile communication network. The wireless signal may include various types of data according to exchange of a voice call signal, an image call signal, or a text/multimedia message.

The wireless Internet module 1012 denotes a module for a wireless Internet access, and may be provided inside or outside the electronic device 100. A wireless Internet technology may include wireless local area network (WLAN), wireless broadband (Wibro), world interoperability for microwave access (Wimax), and high speed downlink packet access (HSDPA). The wireless Internet module 1012 may connect the electronic device 100 to another device through Wi-Fi peer-to-peer (P2P) connection.

The short-range communication module 1013 denotes a module for short-range communication. Short-range communication technology may include Bluetooth, Bluetooth low energy (BLE), radio frequency identification (RFID), infrared data association (IrDA), ultra wideband (UWB), and ZigBee.

The receiver 1020 may receive video (for example, a moving image), audio (for example, voice or music), and additional information (for example, electronic program guides (EPG)) from the outside of the electronic device 100 under control by the controller 1050. The receiver 1020 may include one of a high-definition multimedia interface (HDMI) port 1021, a component jack 1022, a PC port 1023, and a universal serial bus (USB) port 1024, or a combination thereof. The receiver 1020 may further include a display port (DP), a thunderbolt, a mobile high-definition link (MHL), in addition to the HDMI port 1021.

The reproducer 1060 may process an image signal received from the receiver 1020 or communicator 1010 and output the same on the display 1030, according to control by the controller 1050.

The display 1030 may display, on a screen, the image signal received from the reproducer 1060.

The audio processor 1070 may convert an audio signal received from the receiver 1020 or communicator 1010 into an analog audio signal, and output the same to the audio output unit 1080, according to control by the controller 1050.

The audio output unit 1080 may output the received analog audio signal through a speaker.

The detector 1090 detects voice of a user, an image of the user, or an interaction of the user, and may include a microphone, a camera, and a light receiver.

The microphone receives voice uttered by the user. The microphone may convert the received voice into an electric signal and output the electric signal to the controller 1050. The camera may receive an image (for example, consecutive frames) corresponding to motion of the user including a gesture within a camera recognition range. The light receiver receives an optical signal (including a control signal) received from a remote control device. The light receiver may receive an optical signal corresponding to a user input (for example, touch, press, touch gesture, voice, or motion) from the remote control device.

The memory 1040 may store a program related to operations of the electronic device 100 and various types of data generated during the operations of the electronic device 100.

According to an embodiment of the disclosure, the memory 1040 may store a program for implementation of the host system 130 and implementation of the virtual machine system 150.

In an embodiment, the components of the block diagram of FIG. 10 may be integrated, a component may be added, or a component may be omitted according to the specification of the electronic device 100 actually implemented. In other words, two or more components may be integrated into one component or one component may be divided into two or more components when necessary. Also, a function performed by each block is only for describing embodiments of the disclosure and specific operations or apparatuses do not limit the scope of right of the disclosure.

In an embodiment, the electronic device 100 and a method by which the electronic device 100 executes an application in a multiple OS environment, enable a user to easily execute a guest application.

In an embodiment, the electronic device 100 and the method by which the electronic device 100 executes an application in a multiple OS environment, prevent the user from knowing an operating state of a guest OS.

In an embodiment, the electronic device 100 and the method by which the electronic device 100 executes an application in a multiple OS environment, provide, to the user, an execution result of a guest application under a guest OS environment identically in a host OS.

The technical problems to be achieved in the present disclosure are not limited to the technical problems mentioned above, and other technical problems not mentioned will be clearly understood by a person having ordinary skill in the technical field to which the present disclosure belongs from the description below.

A method, performed by the electronic device 100 including the host system 130 and the virtual machine system 150, of executing an application, according to an embodiment of the disclosure of the disclosure, may include obtaining the execution request for the first guest application installed in the virtual machine system 150, through the host system 130.

According to an embodiment of the disclosure, the method may include transmitting, from the host system 130 to the virtual machine system 150, the execution request for the first guest application and the generation request for the first virtual display 156-1, corresponding to the first guest application.

According to an embodiment of the disclosure, the method may include outputting the execution result of the first guest application on the first virtual display 156-1 generated according to the generation request.

According to an embodiment of the disclosure, the method may include transmitting, from the virtual machine system 150 to the host system 130, the first captured image of the screen of the first virtual display 156-1.

According to an embodiment of the disclosure, the method may include outputting the first captured image on the display 115 or 1030 of the electronic device 100 through the host system 130.

According to an embodiment of the disclosure, the method may further include outputting, on the display 115 or 1030 through the host system 130, the second captured image of the screen of the second virtual display 156-2 on which the execution result of the second guest application is output, wherein the first captured image may be included in the first host window and the second captured image is included in the second host window.

According to an embodiment of the disclosure, the second guest application may be executed through an input of a user regarding a home screen output on the display 115 or 1030.

According to an embodiment of the disclosure, the method may further include receiving an input of the user regarding the first captured image output on the display 115 or 1030.

According to an embodiment of the disclosure, the method may further include, when execution of the second guest application is required according to the input of the user, transmitting the execution request for the second guest application from the host system 130 to the virtual machine system 150.

According to an embodiment of the disclosure, the method may further include outputting the execution result of the second guest application on the first virtual display 156-1 through the virtual machine system 150.

According to an embodiment of the disclosure, the method may further include transmitting, from the virtual machine system 150 to the host system 130, the updated first captured image of the screen of the first virtual display 156-1 on which the execution result of the first guest application and the execution result of the second guest application are output.

According to an embodiment of the disclosure, the method may further include outputting the updated first captured image on the display 115 or 1030 through the host system 130.

According to an embodiment of the disclosure, the first guest window including the execution result of the first guest application and the second guest window including the execution result of the second guest application may be output on the first virtual display 156-1, and the first host window including the updated first captured image may be output on the display 115 or 1030.

According to an embodiment of the disclosure, the updated first captured image may be generated by combining a partial image of the home screen provided by the host system 130 with an area where the first guest window and the second guest window are not arranged from among a rectangular image including the first guest window and the second guest window.

According to an embodiment of the disclosure, the obtaining of the execution request for the first guest application may include outputting, on the display 115 or 1030 through the host system 130, the application list of at least one host application installed in the host system 130 and at least one guest application installed in the virtual machine system 150, and obtaining the execution request for the first guest application when the user selects the first guest application from the application list.

A method, performed by the electronic device 100 including the host system 130 and the virtual machine system 150, of executing an application, according to an embodiment of the disclosure, includes obtaining an input of selecting the first guest application installed in the virtual machine system 150 from a screen output on the display 115 or 1030 of the electronic device 100, through the host system 130.

According to an embodiment of the disclosure, the method includes outputting, on the display 115 or 1030 through the host system 130, the first captured image including the execution result of the first guest application.

According to an embodiment of the disclosure, the first captured image may be the captured image of the screen of the first virtual display 156-1 on which the execution result of the first guest application is output.

The electronic device 100 according to an embodiment of the disclosure includes the host system 130, the virtual machine system 150, the display 115 or 1030, and at least one memory storing at least one instruction, wherein, when the at least one instruction is executed by the electronic device 100, the electronic device 100 is configured to obtain the execution request for the first guest application installed in the virtual machine system 150, through the host system 130.

According to an embodiment of the disclosure, when the at least one instruction is executed by the electronic device 100, the electronic device 100 is configured to transmit, from the host system 130 to the virtual machine system 150, the execution request for the first guest application and the generation request for a first virtual display 156-1 corresponding to the first guest application.

According to an embodiment of the disclosure, when the at least one instruction is executed by the electronic device 100, the electronic device 100 is configured to output the execution result of the first guest application on the first virtual display 156-1 generated according to the generation request.

According to an embodiment of the disclosure, when the at least one instruction is executed by the electronic device 100, the electronic device 100 is configured to transmit, from the virtual machine system 150 to the host system 130, the first captured image of the screen of the first virtual display 156-1.

According to an embodiment of the disclosure, when the at least one instruction is executed by the electronic device 100, the electronic device 100 is configured to output the first captured image on the display 115 or 1030 through the host system 130.

According to an embodiment of the disclosure, when the at least one instruction is executed by the electronic device 100, the electronic device 100 may be further configured to output, on the display 115 or 1030 through the host system 130, the second captured image of the screen of the second virtual display 156-2 on which the execution result of the second guest application is output, wherein the first captured image may be included in the first host window and the second captured image is included in the second host window.

According to an embodiment of the disclosure, when the at least one instruction is executed by the electronic device 100, the electronic device 100 may be further configured to receive an input of the user regarding the first captured image output on the display 115 or 1030.

According to an embodiment of the disclosure, when the at least one instruction is executed by the electronic device 100, the electronic device 100 may be further configured to, when execution of the second guest application is required according to the input of the user, transmit the execution request for the second guest application from the host system 130 to the virtual machine system 150.

According to an embodiment of the disclosure, when the at least one instruction is executed by the electronic device 100, the electronic device 100 may be further configured to output the execution result of the second guest application on the first virtual display 156-1 through the virtual machine system 150.

According to an embodiment of the disclosure, when the at least one instruction is executed by the electronic device 100, the electronic device 100 may be further configured to transmit, from the virtual machine system 150 to the host system 130, the updated first captured image of the screen of the first virtual display 156-1 on which the execution result of the first guest application and the execution result of the second guest application are output.

According to an embodiment of the disclosure, when the at least one instruction is executed by the electronic device 100, the electronic device 100 may be further configured to output the updated first captured image on the display 115 or 1030 through the host system 130.

According to an embodiment of the disclosure, the first guest window including the execution result of the first guest application and the second guest window including the execution result of the second guest application may be output on the first virtual display 156-1, and the first host window including the updated first captured image may be output on the display 115 or 1030.

According to an embodiment of the disclosure, the updated first captured image may be generated by combining a partial image of the home screen provided by the host system 130 with an area where the first guest window and the second guest window are not arranged from among a rectangular image including the first guest window and the second guest window.

According to an embodiment of the disclosure, when the at least one instruction is executed by the electronic device 100, the electronic device 100 may be further configured to output, on the display 115 or 1030 through the host system 130, the application list of at least one host application installed in the host system 130 and at least one guest application installed in the virtual machine system 150, and obtain the execution request for the first guest application when the user selects the first guest application from the application list.

The electronic device 100 according to an embodiment includes the host system 130, the virtual machine system 150, the display 115 or 1030, and at least one memory storing at least one instruction, wherein, when the at least one instruction is executed by the electronic device 100, the electronic device 100 is configured to obtain the input of selecting the first guest application installed in the virtual machine system 150 from the home screen output on the display 115 or 1030 through the host system 130.

According to an embodiment of the disclosure, when the at least one instruction is executed by the electronic device 100, the electronic device 100 is configured output, on the display 115 or 1030 through the host system 130, the first captured image including the execution result of the first guest application.

According to an embodiment of the disclosure, the first captured image may be the captured image of the screen of the first virtual display 156-1 on which the execution result of the first guest application is output.

The electronic device 100 and the method by which the electronic device 100 executes an application in a multiple OS environment, according to an embodiment of the disclosure, enable a user to easily execute a guest application.

In an embodiment, the electronic device 100 and the method by which the electronic device 100 executes an application in a multiple OS environment, prevent the user from knowing an operating state of a guest OS.

In an embodiment, the electronic device 100 and the method by which the electronic device 100 executes an application in a multiple OS environment, provide, to the user, an execution result of a guest application under a guest OS environment identically in a host OS.

The effects obtainable from the present disclosure are not limited to the effects mentioned above, and other effects not mentioned will be clearly understood by a person having ordinary skill in the art to which the present disclosure belongs from the description.

The embodiments of the disclosure described above, and variations thereof, may be written as computer-executable programs that may be stored in a machine-readable storage medium.

The machine-readable storage medium may be provided in the form of a non-transitory storage medium. Here, the "non-transitory storage medium" only denotes a tangible device and does not contain a signal (for example, electromagnetic waves). This term does not distinguish a case where data is stored in the storage medium semi-permanently and a case where the data is stored in the storage medium temporarily. For example, the "non-transitory storage medium" may include a buffer where data is temporarily stored.

A method according to various embodiments of the disclosure in the present specification may be provided by being included in a computer program product. The computer program products are products that can be traded between sellers and buyers. The computer program product may be distributed in a form of machine-readable storage medium (for example, a compact disc read-only memory (CD-ROM)), or distributed (for example, downloaded or uploaded) through an application store or directly or online between two user devices (for example, smart phones). In the case of online distribution, at least a part of the computer program product (for example, a downloadable application) may be at least temporarily generated or temporarily stored in a machine-readable storage medium, such as a server of a manufacturer, a server of an application store, or a memory of a relay server.

While certain embodiments of the disclosure have been described with reference to the figures, it will be understood by one of ordinary skill in the art that various changes in form and details may be made therein without departing from the scope as defined by the following claims and their equivalents.

## Claims

1. A method of executing an application, performed by an electronic device (100) including a host system (130) and a virtual machine system (150), the method comprising:
obtaining, through the host system (130), a first execution request for a first guest application installed in the virtual machine system (150);
transmitting, from the host system (130) to the virtual machine system (150), the first execution request and a generation request for a first virtual display (156-1) corresponding to the first guest application;
outputting a first execution result of the first guest application on the first virtual display (156-1) that is generated based on the generation request;
transmitting, from the virtual machine system (150) to the host system (130), a first captured image of the first virtual display (156-1); and
outputting, through the host system (130), the first captured image on a display (115; 1030) of the electronic device (100) .

2. The method of claim 1, further comprising:
outputting, on the display (115; 1030) through the host system (130), a second captured image of a second virtual display (156-2) on which a second execution result of a second guest application is output,
wherein the first captured image is included in a first host window and the second captured image is included in a second host window.

3. The method of any one of claims 1 and 2, wherein the second guest application is executed based on a user input corresponding to the second guest application on a home screen output on the display (115; 1030).

4. The method of any one of claims 1 to 3, further comprising:
receiving a user input corresponding to the first captured image output on the display (115; 1030);
based on the user input corresponding to a second guest application, transmitting, from the host system (130) to the virtual machine system (150), a second execution request corresponding to the second guest application;
outputting, through the virtual machine system (150), a second execution result on the first virtual display (156-1);
transmitting, from the virtual machine system (150) to the host system (130), an updated first captured image of the first virtual display (156-1) on which the first execution result and the second execution result are output; and
outputting, through the host system (130), the updated first captured image on the display (115; 1030).

5. The method of any one of claims 1 to 4, wherein a first guest window including the first execution result and a second guest window including the second execution result are output on the first virtual display (156-1), and
wherein a first host window including the updated first captured image is output on the display (115; 1030).

6. The method of any one of claims 1 to 5, wherein the updated first captured image is generated by combining a partial image of the home screen provided by the host system (130) with an area where the first guest window and the second guest window are not arranged from among a rectangular image including the first guest window and the second guest window.

7. The method of any one of claims 1 to 6, wherein the obtaining of the first execution request for the first guest application comprises:
outputting, on the display (115; 1030) through the host system (130), an application list of at least one host application installed in the host system (130) and at least one guest application installed in the virtual machine system (150); and
obtaining the first execution request based on the first guest application being selected from the application list by a user input corresponding to the first guest application.

8. A method of executing an application, performed by an electronic device (100) including a host system (130) and a virtual machine system (150), the method comprising:
obtaining, through the host system (130), an input selecting a first guest application, installed in the virtual machine system (150), from a screen of a display (115; 1030) of the electronic device (100); and
outputting, on the display (115; 1030) through the host system (130), a first captured image including an execution result of the first guest application,
wherein the first captured image is a captured image of a first virtual display (156-1) on which the execution result of the first guest application is output.

9. An electronic device (100) comprising:
a host system (130);
a first virtual machine system (150);
a display (115; 1030);
at least one memory storing at least one instruction; and
at least one processor configured to execute the at least one instruction to::
obtain, through the host system (130), a first execution request for a first guest application installed in the first virtual machine system (150);
transmit, from the host system (130) to the first virtual machine system (150), the first execution request and a generation request for a first virtual display (156-1) corresponding to the first guest application;
output a first execution result of the first guest application on the first virtual display (156-1) that is generated based on the generation request;
transmit, from the first virtual machine system (150) to the host system (130), a first captured image of the first virtual display (156-1); and
output, through the host system (130), the first captured image on the display (115; 1030).

10. The electronic device (100) of claim 9, wherein the at least one processor is further configured to execute the at least one instruction to:
output, on the display (115; 1030) through the host system (130), a second captured image of a second virtual display (156-2) on which a second execution result of a second guest application is output,
wherein the first captured image is included in a first host window and the second captured image is included in a second host window.

11. The electronic device (100) of any one of claims 9 and 10, wherein the at least one processor is further configured to execute the at least one instruction to:
receive an input of a user regarding the first captured image output on the display (115; 1030);
when execution of a second guest application is required according to the input of the user, transmit an execution request for the second guest application from the host system (130) to the first virtual machine system (150);
output the second execution result of the second guest application on the first virtual display (156-1) through the first virtual machine system(150);
transmit, from the first virtual machine system (150) to the host system (130), an updated first captured image of the first virtual display (156-1) on which the first execution result of the first guest application and the second execution result of the second guest application are output; and
output the updated first captured image on the display (115; 1030) through the host system (130).

12. The electronic device (100) of any one of claims 9 to 11, wherein the at least one processor is further configured to execute the at least one instruction to:
output, on the first virtual display (156-1), a first guest window including the first execution result and a second guest window including the second execution result, and
output, on the display (115; 1030), a first host window including the updated first captured image.

13. The electronic device (100) of any one of claims 9 to 12, wherein the at least one processor is further configured to execute the at least one instruction to:
generate the updated first captured image by combining a partial image of a home screen provided by the host system (130) with an area where the first guest window and the second guest window are not arranged from among a rectangular image including the first guest window and the second guest window.

14. The electronic device (100) of any one of claims 9 to 13, wherein the at least one processor is further configured to execute the at least one instruction to:
output, on the display (115; 1030) through the host system (130), an application list of at least one host application installed in the host system (130) and at least one guest application installed in the first virtual machine system(150); and
obtain the first execution request based on the first guest application being selected from the application list by a user input corresponding to the first guest application.

15. The method of any one of claims 1 to 7, wherein the transmitting, from the host system (130) to the virtual machine system (150), the first execution request and the generation request, comprises:
transmitting the first execution request and the generation request, from the host system (130) to the virtual machine system (150), through a guest controller corresponding to the virtual machine system (150), from among a plurality of guest controllers each corresponding to a different virtual machine system on the electronic device.
